# EUROPEAN PATENT APPLICATION

(11) **EP 4 792 774 A1**
(43) Date of publication of application: **19.08.2026**
(21) Application number: 26155024.8
(22) Date of filing: 29.01.2026
(51) Int. Cl.: A61C 7/28

(54) **ORTHODONTIC BRACKET**

(30) Priority: 14.02.2025 JP 2025022551
(71) Applicant: Tomy Incorporated, Fukushima-ken 979-1305 (JP)
(72) Inventor: Ogasawara, Yutaka, Fukushima, Iwaki City, 972-8326 (JP)
(74) Representative: Grünecker Patent- und Rechtsanwälte PartG mbB

(57) **Abstract**

An orthodontic bracket includes: a body; a shutter; and a clip. The body includes a positioning portion configured to allow the clip to be selectively positioned at a closed position where the shutter becomes in a closed state and at an open position where the shutter becomes in an open state. The positioning portion includes: an open-position positioning portion configured to store the clip in the open position; a closed-position positioning portion located between the open-position positioning portion and the slot in an opening and closing direction and configured to store the clip in the closed position; and a passing portion provided between the open-position positioning portion and the closed-position positioning portion in the opening and closing direction and configured to cause the clip to elastically deform when the clip moves between the open-position positioning portion and the closed-position positioning portion.

## Description

### TECHNICAL FIELD

The present disclosure relates to an orthodontic bracket.

### BACKGROUND ART

US 10,660,729 B2 discloses a self-ligating bracket system. The self-ligating bracket system includes a body, an archwire slot receivable for an archwire, and a locking mechanism. The locking mechanism is configured to allow a ligating sliding member to move between an open position, such that an archwire may be inserted into and/or removed from the archwire slot, and a closed position, such that an archwire is retained within the archwire slot.

### SUMMARY OF INVENTION

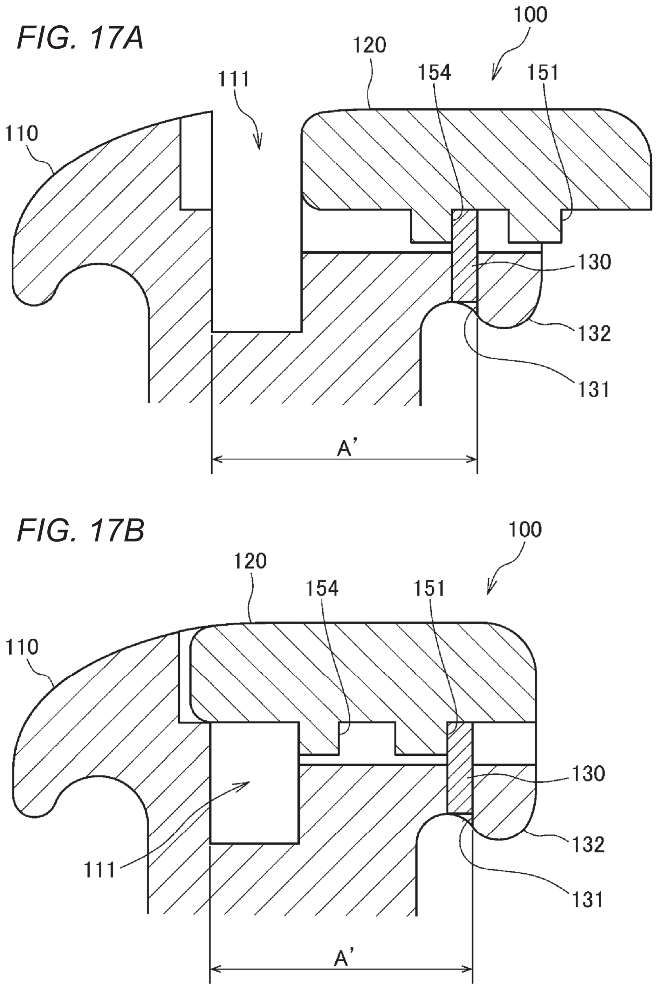

FIG. 17A shows a cross-sectional view of an orthodontic bracket in an open state according to a reference example. FIG. 17B shows a cross-sectional view of the orthodontic bracket in a closed state according to the reference example. As shown in FIG. 17A, the orthodontic bracket 100 includes a body 110, a shutter 120 that closes a slot 111 of the body 110, and a clip 130 attached to the body 110. The shutter 120 has an open-position positioning portion 154 into which the clip 130 fits when the shutter 120 is in an open state, and a closed-position positioning portion 151 into which the clip 130 fits when the shutter 120 is in a closed state.

However, in the closed state shown in FIG. 17B, the shutter 120 needs to cover the slot 111, and the closed-position positioning portion 151 needs to store the clip 130. Here, a left-right direction in the drawing is tentatively referred to as a front-rear direction of the orthodontic bracket 100. An opening and closing direction of the shutter 120 is also synonymous with the front-rear direction. As shown in FIG. 17B, a length of the orthodontic bracket 100 in the front-rear direction is determined according to a distance A' from the closed-position positioning portion 151 to the slot 111.

That is, the shutter 120 needs to extend from the closed-position positioning portion 151 to the slot 111. In the closed state, the clip 130 has to be disposed away from the slot 111 such that the open-position positioning portion 154 of the shutter 120 can be positioned between the clip 130 and the slot 111.

An object of the present disclosure is to provide an orthodontic bracket with a reduced length in a front-rear direction.

In one aspect of the present disclosure, an orthodontic bracket includes: a body including a lower surface and an upper surface, the lower surface being configured to be directly or indirectly attached to a tooth, the upper surface having a slot configured to store an archwire; a shutter configured to move on the upper surface of the body in an opening and closing direction intersecting with the slot such that the shutter is allowed to be selectively placed in a closed state to close the slot and in an open state to open the slot; and a clip configured to be attached to a lower surface of the shutter and configured to elastically deform. The body includes a positioning portion configured to allow the clip to be selectively positioned at a closed position where the shutter becomes in the closed state and at an open position where the shutter becomes in the open state. The positioning portion of the body includes: an open-position positioning portion configured to store the clip in the open position; a closed-position positioning portion located between the open-position positioning portion and the slot in the opening and closing direction and configured to store the clip in the closed position; and a passing portion provided between the open-position positioning portion and the closed-position positioning portion in the opening and closing direction and configured to cause the clip to elastically deform when the clip moves between the open-position positioning portion and the closed-position positioning portion.

According to the present disclosure, an orthodontic bracket with a reduced length in a front-rear direction is provided.

### BRIEF DESCRIPTION OF DRAWINGS

The present disclosure will be described in detail based on the following without being limited thereto, wherein:
FIG. 1 is an exploded perspective view of an orthodontic bracket 1 according to the present embodiment;
FIG. 2 is a front view of a clip 30;
FIG. 3 is an enlarged view of an upper surface of a body 10;
FIG. 4 is a cross-sectional view of the orthodontic bracket 1 taken along a line IV-IV in FIG. 3;
FIG. 5A is a diagram of the clip 30 positioned at a rear end of an insertion facilitating portion 56;
FIG. 5B is a diagram of the clip 30 positioned at a retaining portion 55;
FIG. 5C is a diagram of the clip 30 positioned at an open-position positioning portion 54;
FIG. 6A is a side cross-sectional view of the orthodontic bracket 1 in an open state;
FIG. 6B is a side cross-sectional view of the orthodontic bracket 1 in a closed state;
FIG. 7A is a diagram of the clip 30 positioned at a guide portion 53;
FIG. 7B is a diagram of the clip 30 positioned at a passing portion 52;
FIG. 7C is a diagram of the clip 30 positioned at a closed-position positioning portion 51;
FIG. 8 is a side view of the orthodontic bracket 1 in the open state;
FIG. 9 is a diagram of the orthodontic bracket 1 as viewed from a rear side;
FIG. 10A is a front view of a clip 30A of an orthodontic bracket according to a first modification;
FIG. 10B is a front view and a top view of a clip 30B of an orthodontic bracket according to a second modification;
FIG. 10C is a front view and a top view of the clip 30B of the orthodontic bracket according to the second modification;
FIG. 10D is a front view and a top view of the clip 30B of the orthodontic bracket according to the second modification;
FIG. 11A is a top view of an orthodontic bracket 1B according to a third modification in a closed state, to which the clip 30B shown in FIGS. 10B to 10D is applied;
FIG. 11B is a top view of the orthodontic bracket 1B according to the third modification in an open state;
FIG. 12A is a top view of an orthodontic bracket 1C according to a fourth modification in a closed state, to which the clip 30B shown in FIGS. 10B to 10D is applied;
FIG. 12B is a top view of the orthodontic bracket 1C according to the fourth modification in an open state;
FIG. 13A is a top view of an orthodontic bracket 1D according to a fifth modification in a closed state, to which the clip 30 shown in FIG. 1 is applied;
FIG. 13B is a top view of the orthodontic bracket 1D according to the fifth modification in an open state;
FIG. 14A is a top view of an orthodontic bracket 1E according to a sixth modification in a closed state, to which the clip 30 shown in FIG. 1 is applied;
FIG. 14B is a top view of the orthodontic bracket 1E according to the sixth modification in an open state;
FIG. 15A is a top view of an orthodontic bracket 1F according to a seventh modification in a closed state, to which the clip 30 shown in FIG. 1 is applied;
FIG. 15B is a top view of the orthodontic bracket 1F according to the seventh modification in an open state;
FIG. 16A is a top view of an orthodontic bracket 1G according to an eighth modification in a closed state, to which the clip 30 shown in FIG. 1 is applied;
FIG. 16B is a top view of the orthodontic bracket 1G according to the eighth modification in an open state;
FIG. 17A is a side cross-sectional view of an orthodontic bracket 100 according to a reference example in an open state; and
FIG. 17B is a side cross-sectional view of the orthodontic bracket 100 according to the reference example in a closed state.

### DESCRIPTION OF EMBODIMENTS

Hereinafter, an embodiment of the present disclosure will be described with reference to the drawings. For convenience, descriptions of components having the same reference numbers as those already described in the description of the embodiment will be omitted.

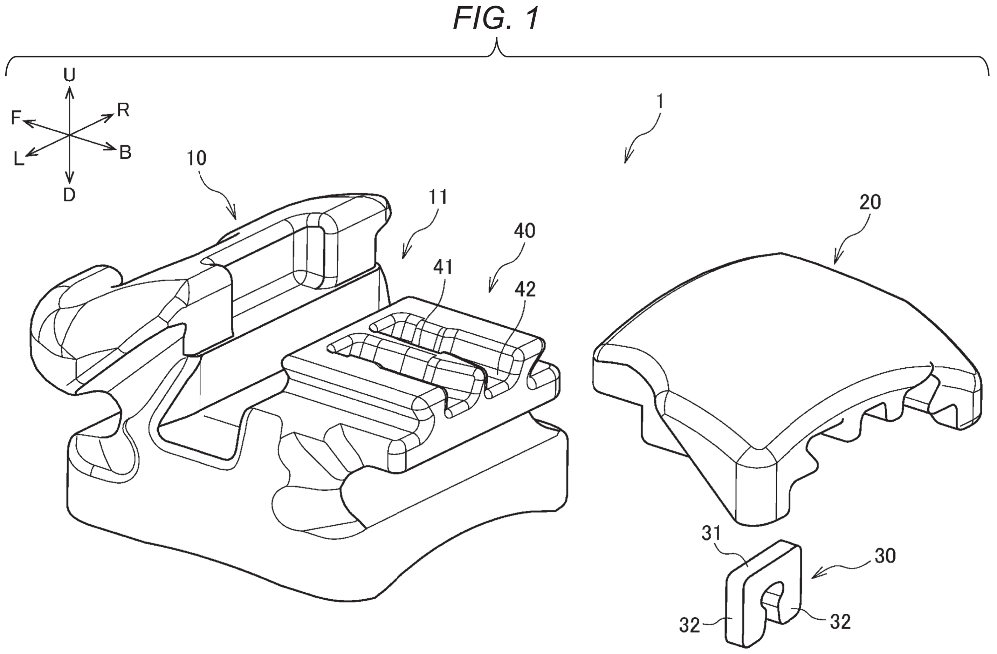

FIG. 1 is an exploded perspective view of an orthodontic bracket 1 according to the present embodiment. As shown in FIG. 1, the orthodontic bracket 1 includes a body 10, a shutter 20, and a clip 30. The orthodontic bracket 1 is used for an orthodontic treatment together with an archwire, a ligature wire, and the like. For convenience, in the following description, a forward direction F, a rearward direction B, an upward direction U, a downward direction D, a leftward direction L, and a rightward direction R are defined as directions shown in FIG. 1, but these directions are different from directions in an actual use.

The body 10 is a portion where an archwire or a ligature wire is attached. A slot 11 that stores the archwire is provided on an upper surface of the body 10. The body 10 is made of ceramics, metal, or resin. A lower surface of the body 10 may be directly attached to a tooth, or may be indirectly attached to the tooth via another member such as a bonding base.

The slot 11 extends in a left-right direction in FIG. 1. The slot 11 extends from a left side surface to a right side surface of the body 10. The slot 11 has a substantially rectangular shape in a cross-sectional view in which the slot 11 extends in the front-rear direction and the up-down direction.

The shutter 20 is a member capable of closing the slot 11. The shutter 20 is also made of ceramics, metal, or resin. The shutter 20 is a substantially plate-shaped member provided above the body 10 and extending in the front-rear direction and the left-right direction.

The shutter 20 is provided to be movable in the front-rear direction (opening and closing direction) that intersects with the slot 11 on the upper surface of the body 10. The shutter 20 can be placed in a closed state where the slot 11 is closed, and in an open state where the slot 11 is open. A direction where the shutter 20 is moved to be in the closed state is the forward direction F, and a direction where the shutter 20 is moved to be in the open state is the rearward direction B. During an orthodontic treatment, the shutter 20 is set to the closed state while the archwire is stored in the slot 11, and is set to the open state when the archwire is replaced.

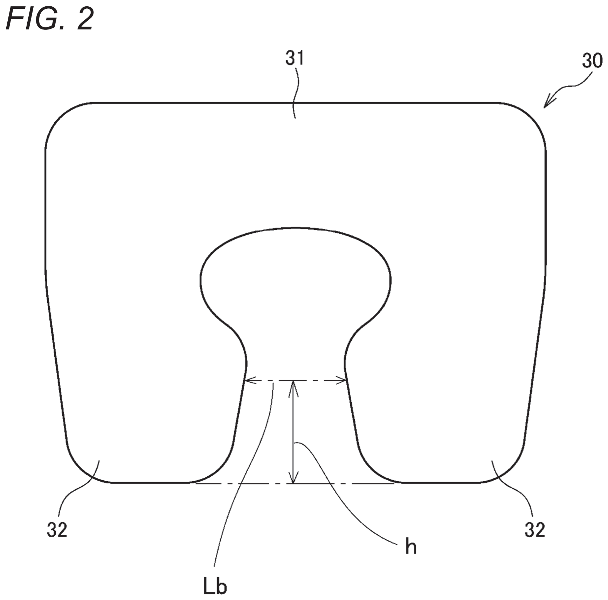

FIG. 2 is a front view of the clip 30. As shown in FIG. 2, the clip 30 is made of metal, resin, or ceramics with toughness, and is an elastic member that can be deformed elastically. The clip 30 is an inverted U-shaped member. In the shown example, the clip 30 is a plate-shaped member that extends in the up-down direction and a left-right direction. The clip 30 includes a coupling portion 31 that extends in the left-right direction, and legs 32 that extend downward from left and right ends of the coupling portion 31. The coupling portion 31 couples upper ends of the pair of legs 32.

In the present embodiment, the clip 30 is described as a plate-shaped member, but the clip 30 may be implemented by a wire rod with a circular cross section as long as the clip 30 is an elastically deformable member.

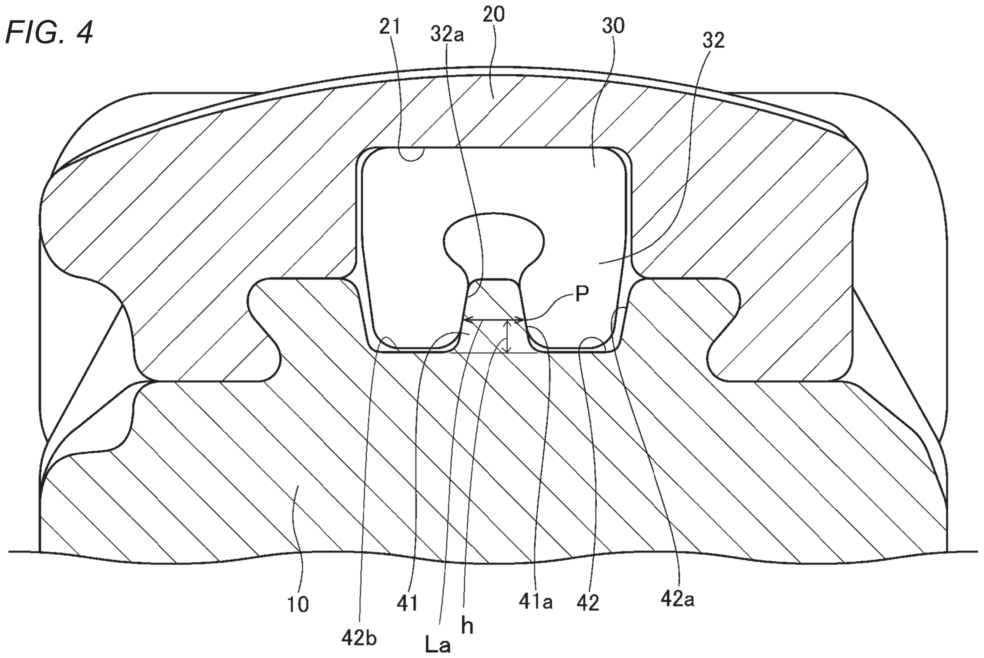

The clip 30 is attached to a lower surface of the shutter 20. An upper portion of the coupling portion 31 of the clip 30 is inserted into a recess 21 (see FIG. 4) provided in the lower surface of the shutter 20 and having a size allowing the coupling portion 31 of the clip 30 to be stored. The clip 30 is elastically deformable such that a distance between the legs 32 changes while being attached to the shutter 20.

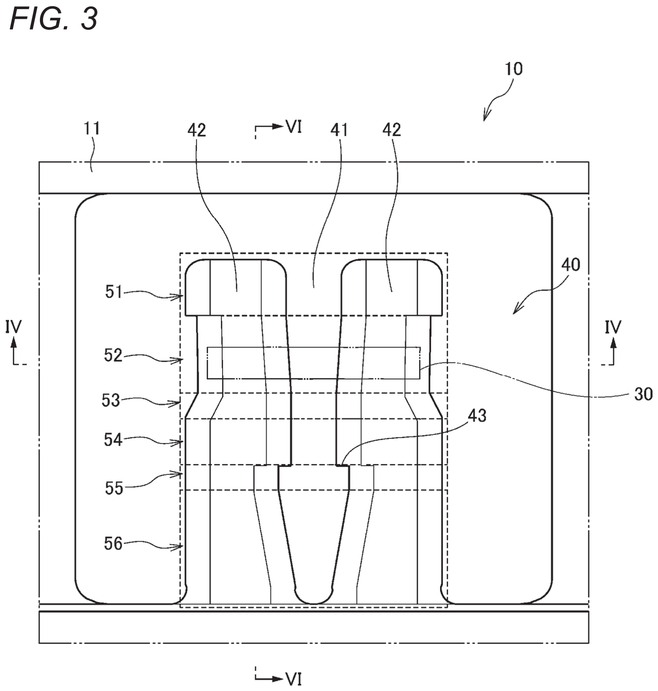

FIG. 3 is an enlarged view of an upper surface of the body 10. As shown in FIG. 3, the body 10 includes a positioning portion 40 that positions the clip 30 to a closed position where the shutter 20 is in the closed state and an open position where the shutter 20 is in the open state. In the shown example, the positioning portion 40 is provided on the upper surface of the body 10 to face the lower surface of the shutter 20.

The positioning portion 40 includes a guide rail portion 41 and two guide grooves 42. The guide rail portion 41 is a protrusion extending in the front-rear direction and protruding upward from the upper surface of the body 10. The guide grooves 42 are grooves extending along the front-rear direction on both sides of the guide rail portion 41. The pair of legs 32 of the clip 30 are guided in the front-rear direction along the guide groove 42 while straddling the guide rail portion 41.

The guide rail portion 41 and the guide groove 42 constitute, from a closing side (forward direction F) toward an opening side (rearward direction B) in the opening and closing direction, a closed-position positioning portion 51, a passing portion 52, a guide portion 53, an open-position positioning portion 54, a retaining portion 55, and an insertion facilitating portion 56. The guide rail portion 41 and the guide grooves 42 constitute the closed-position positioning portion 51, the passing portion 52, the guide portion 53, the open-position positioning portion 54, the retaining portion 55, and the insertion facilitating portion 56 at positions where width dimensions (length in the left-right direction) of the guide rail portion 41 are different.

FIG. 4 is a cross-sectional view of the orthodontic bracket 1 in FIG. 3 taken along a line IV-IV. As shown in FIG. 4, the guide rail portion 41 has a trapezoidal shape whose width decreases toward the upper side in the cross-sectional view. Therefore, the width dimension (length in the left-right direction) of the guide rail portion 41 decreases from a lower side to an upper side. In the present embodiment, each of side surfaces 41a of the guide rail portion 41 has a constant inclination angle with respect to the upper surface of the body 10 over the front-rear direction.

The side surface 41a of the guide rail portion 41 is inclined such that the guide rail portion 41 has a tapered shape, and thus, width dimensions at different positions in the up-down direction are different. As will be described later, the guide rail portion 41 may have different width dimensions at different positions in the front-rear direction. In the following description, a term "width dimension La of the guide rail portion 41" is defined as follows.

First, the clip 30 is disposed on the passing portion 52 in a state where the clip 30 is not elastically deformed, and each of points where both side surfaces 41a of the guide rail portion 41 in the passing portion 52 are in contact with the clip 30 is defined as a contact point P. Further, a distance in the up-down direction of the contact point P from a bottom surface 42b of the guide groove 42 is defined as a height h. A dimension of the guide rail portion 41 in the left-right direction at a position of the height h from the bottom surface 42b of the guide groove 42 is referred to as the width dimension La of the guide rail portion 41. In the present embodiment, since a cross-sectional shape of the guide rail portion 41 differs depending on a position in the front-rear direction, the width dimension La of the guide rail portion 41 has a different value depending on the position in the front-rear direction.

As in the shown example, when the legs 32 of the clip 30 are in surface contact with the guide rail portion 41, a specific height h is set in an surface contact area, and the dimension of the guide rail portion 41 in the left-right direction at this specific height h may be defined as the width dimension La of the guide rail portion 41. For example, the width dimension La of the guide rail portion 41 may be defined by a distance in the left-right direction between midpoints in the up-down direction of contact surfaces of both side surfaces 41a of the guide rail portion 41.

Each of the guide grooves 42 has the bottom surface 42b extending laterally from the side surface 41a of the guide rail portion 41, and a side surface 42a extending diagonally upward from the bottom surface 42b to form a pair with the side surface 41a of the guide rail portion 41. The side surface 42a of the guide groove 42 is also an inclined surface in which a separation distance in the left-right direction from the side surface 41a of the guide rail portion 41 increases from the lower side to the upper side. Regarding the separation distance in the left-right direction between the side surface 41a of the guide rail portion 41 and the side surface 42a of the guide groove 42, a dimension in the left-right direction at the height h from the bottom surface 42b will be referred to as a width dimension of the guide groove 42.

Inner side surfaces 32a of the pair of legs 32 of the clip 30 facing each other are also inclined surfaces that approach each other toward the upper side. That is, the inner side surfaces 32a of the legs 32 facing each other are inclined surfaces such that a separation distance between the legs 32 decreases to the upper side, whereby each of the legs 32 has a tapered shape, and thus, the distance between the legs 32 decreases from the lower side to the upper side. In the following description, as shown in FIG. 2, the separation distance in the left-right direction between the pair of legs 32 at the positions of the height h from lower ends of the legs 32 of the clip 30 that is not elastically deformed is referred to as a "distance Lb between the legs 32". Here, the height h is a height from the bottom surface 42b of the guide groove 42 to the contact point P at which the width dimension La of the guide rail portion 41 is defined. The legs 32 serve as an example of a first leg and an example of a second leg, and the side surfaces 32a serve as an example of a first side surface and an example of a second side surface.

Returning to FIG. 3, the closed-position positioning portion 51 is provided at a front end of the positioning portion 40. A length of the closed-position positioning portion 51 in the front-rear direction is slightly larger than a length of the clip 30 in the front-rear direction. The width dimension La of the guide rail portion 41 at the closed-position positioning portion 51 is larger than the distance Lb between the pair of legs 32 of the clip 30 which is not elastically deformed.

The passing portion 52 is provided behind the closed-position positioning portion 51. A width dimension La of the guide rail portion 41 at a front end of the passing portion 52 is larger than a width dimension La of the guide rail portion 41 at a rear end of the passing portion 52. The width dimension La of the guide rail portion 41 at the passing portion 52 increases toward the closed-position positioning portion 51. The width dimension La of the guide rail portion 41 at the front end of the passing portion 52 is equal to a width dimension La of the guide rail portion 41 at a rear end of the closed-position positioning portion 51.

The guide portion 53 is provided behind the passing portion 52. The guide portion 53 extends in the front-rear direction and guides the clip 30 in the front-rear direction. The width dimension La of the guide rail portion 41 at the guide portion 53 is constant in the front-rear direction. A total length of the passing portion 52 and the guide portion 53 in the front-rear direction is larger than the length of the clip 30 in the front-rear direction. The width dimension La of the guide rail portion 41 at the guide portion 53 is smaller than the distance Lb between the pair of legs 32. In the guide portion 53, the width dimension of the guide groove 42 decreases from the rear side to the front side.

The open-position positioning portion 54 is provided behind the guide portion 53. The width dimension La of the guide rail portion 41 at the open-position positioning portion 54 is constant in the front-rear direction. The width dimension La of the guide rail portion 41 at the open-position positioning portion 54 is equal to a width dimension La of the guide rail portion 41 at a rear end of the guide portion 53. A length of the open-position positioning portion 54 in the front-rear direction is slightly larger than the length of the clip 30 in the front-rear direction. The side surface 41a of the guide rail portion 41 is smoothly continuous from the closed-position positioning portion 51 to the passing portion 52, the guide portion 53, and the open-position positioning portion 54.

The retaining portion 55 is provided behind the open-position positioning portion 54. The width dimension La of the guide rail portion 41 at the retaining portion 55 is larger than the width dimension La of the guide rail portion 41 at the open-position positioning portion 54. A step surface 43 is provided on the side surface 41a of the guide rail portion 41 between the open-position positioning portion 54 and the retaining portion 55. The width dimension La of the guide rail portion 41 at the retaining portion 55 is larger than the distance Lb between the pair of legs 32.

The insertion facilitating portion 56 is provided behind the retaining portion 55. A width dimension La of the guide rail portion 41 at a front end of the insertion facilitating portion 56 is equal to a width dimension La of the guide rail portion 41 at a rear end of the retaining portion 55. A width dimension La of the guide rail portion 41 at a rear end of the insertion facilitating portion 56 is smaller than the distance Lb between the pair of legs 32. The width dimension of the guide rail portion 41 at the insertion facilitating portion 56 increases from the rear side toward the front side.

### (Attachment Method)

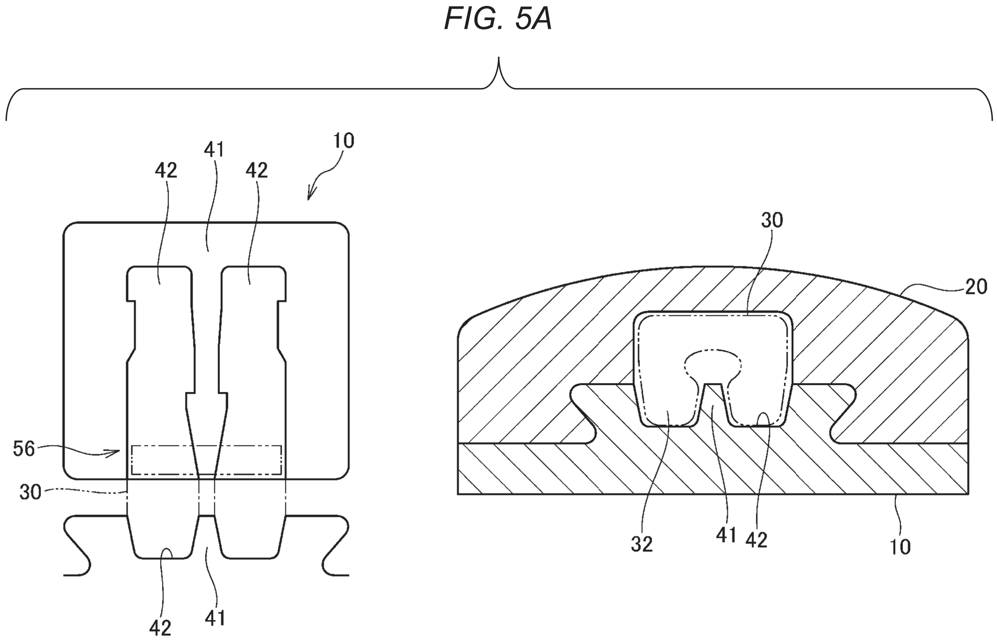

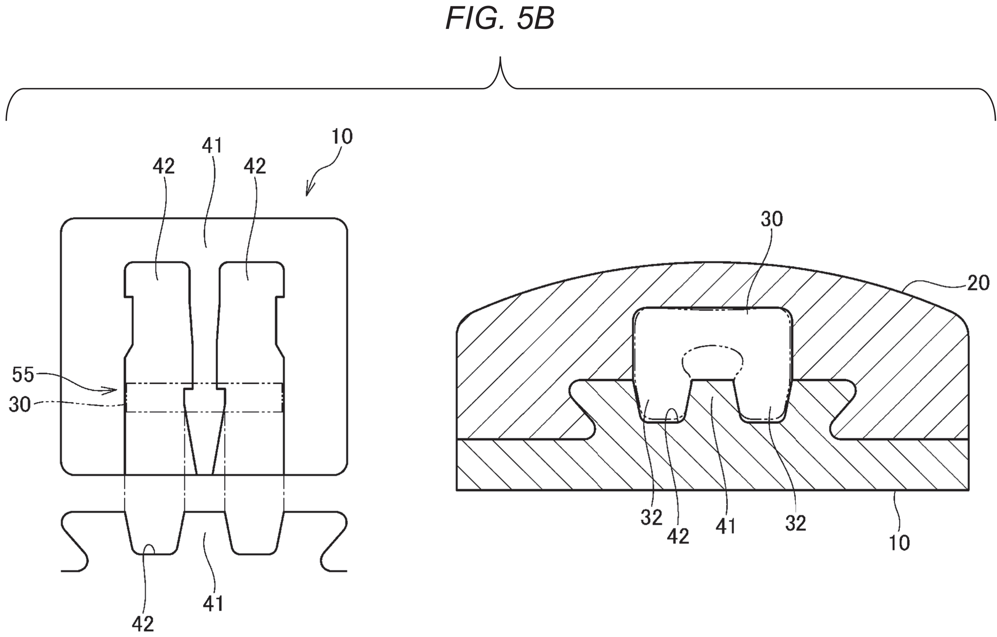

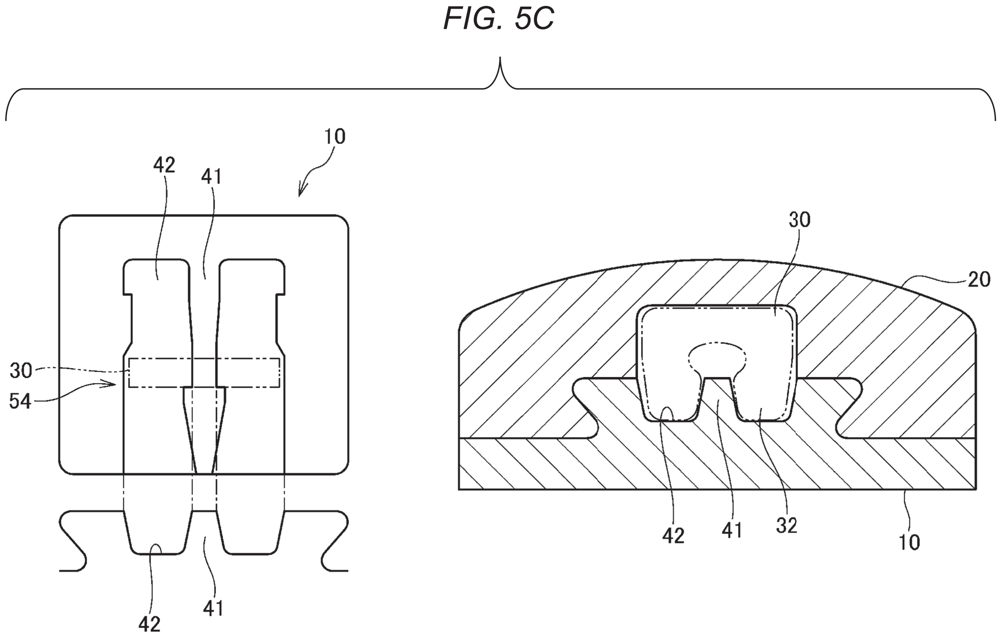

Next, a method of attaching, to the body 10, the shutter 20 to which the clip 30 is attached will be described with reference to FIGS. 5A, 5B, and 5C. In the following description, the attachment method will be described focusing on the clip 30, but an operator actually operates the shutter 20 to move the clip 30.

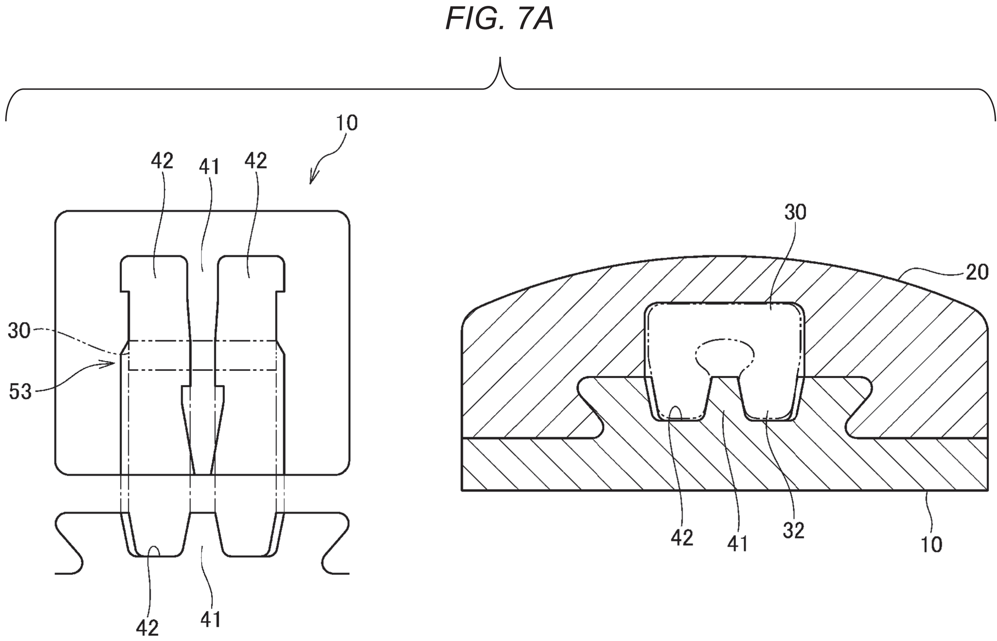

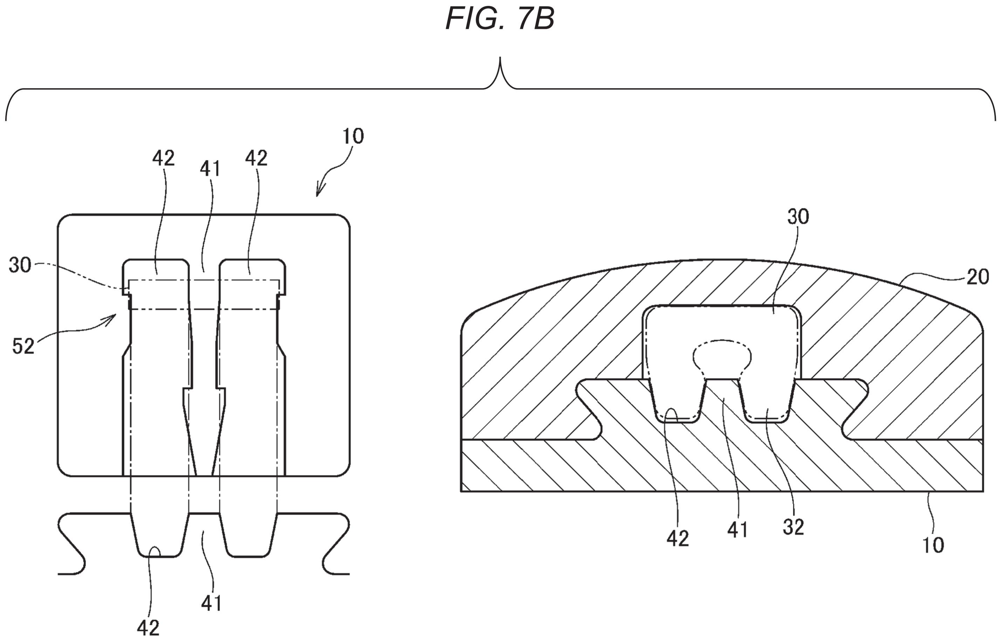

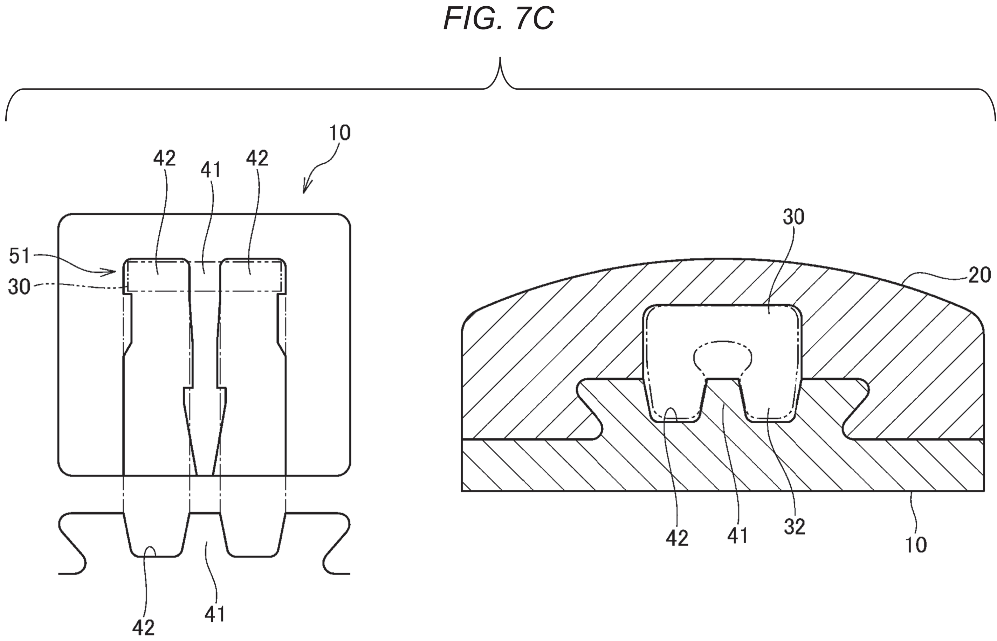

FIG. 5A is a diagram of the clip 30 positioned at the rear end of the insertion facilitating portion 56. A left upper side of FIG. 5A is a top view of the body 10, a left lower side of FIG. 5A is a cross-sectional view of the body 10, and a right side of FIG. 5A is a cross-sectional view of the body 10 and the shutter 20 taken along a cross-section extending in the up-down direction and the left-right direction at the position of the clip 30. In each of FIGS. 5B, 5C, 7A, 7B, and 7C, similarly, a left upper side is a top view of the body 10, a left lower side is a cross-sectional view of the body 10, and a right side is a cross-sectional view of the body 10 and the shutter 20 in a cross-section extending in the up-down direction and the left-right direction at the position of the clip 30.

First, as shown in FIG. 5A, the legs 32 of the clip 30 are positioned at the rear end of the guide grooves 42. In this state, the pair of legs 32 straddle the guide rail portion 41. Since the width dimension La of the rear end of the guide rail portion 41 at the insertion facilitating portion 56 is smaller than the distance Lb between the pair of legs 32, the clip 30 is not elastically deformed.

In this state, the clip 30 is moved forward along the guide rail portion 41. Here, the width dimension La of the guide rail portion 41 at the insertion facilitating portion 56 gradually increases toward the front side, and the width dimension La of the guide rail portion 41 at the front end of the insertion facilitating portion 56 is larger than the distance Lb of the pair of legs 32. Therefore, when the clip 30 is moved forward, the clip 30 is elastically deformed such that a space between the pair of leg portions 32 of the clip 30 is pushed to expand.

FIG. 5B is a diagram when the clip 30 is positioned at the retaining portion 55. As shown in FIG. 5B, the clip 30 is elastically deformed such that the distance Lb between the pair of legs 32 becomes the largest when the clip 30 passes through the retaining portion 55, and thus, a largest operating force is required when the clip 30 passes through the retaining portion 55.

FIG. 5C is a diagram of the clip 30 positioned at the open-position positioning portion 54. As shown in FIG. 5C, the width dimension La of the guide rail portion 41 at the open-position positioning portion 54 is smaller than the distance Lb between the pair of legs 32. Therefore, when the clip 30 passes through the retaining portion 55 and reaches the open-position positioning portion 54, the clip 30 is not elastically deformed. In this way, the clip 30 and the shutter 20 can be attached to the body 10.

The step surface 43 is provided between the open-position positioning portion 54 and the retaining portion 55. Therefore, even when the shutter 20 is released in this state, the clip 30 abuts against the step surface 43 and cannot pass the retaining portion 55, and the clip 30 is prevented from coming off from the body 10.

### (Operation from Open State to Closed State)

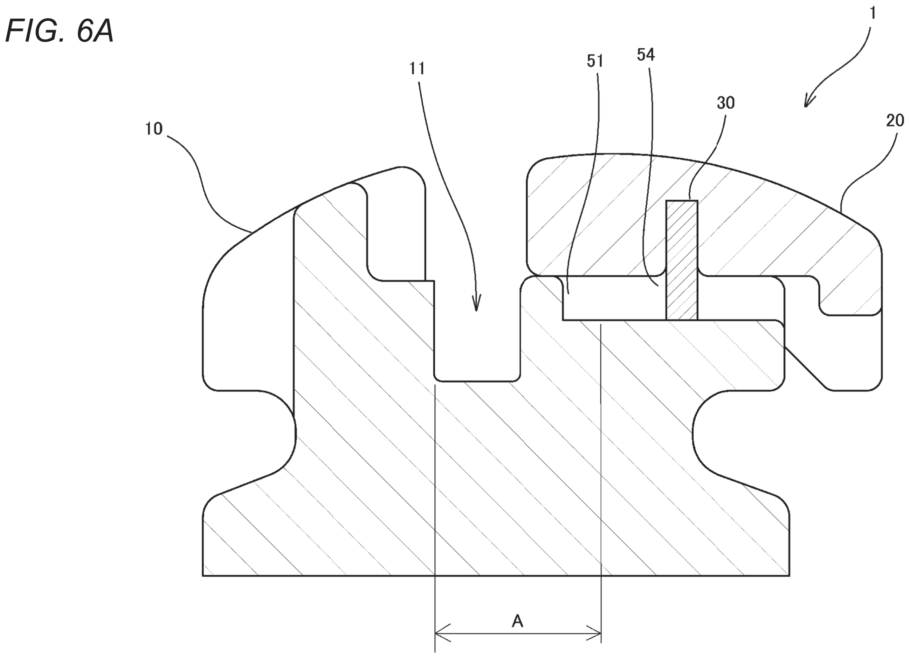

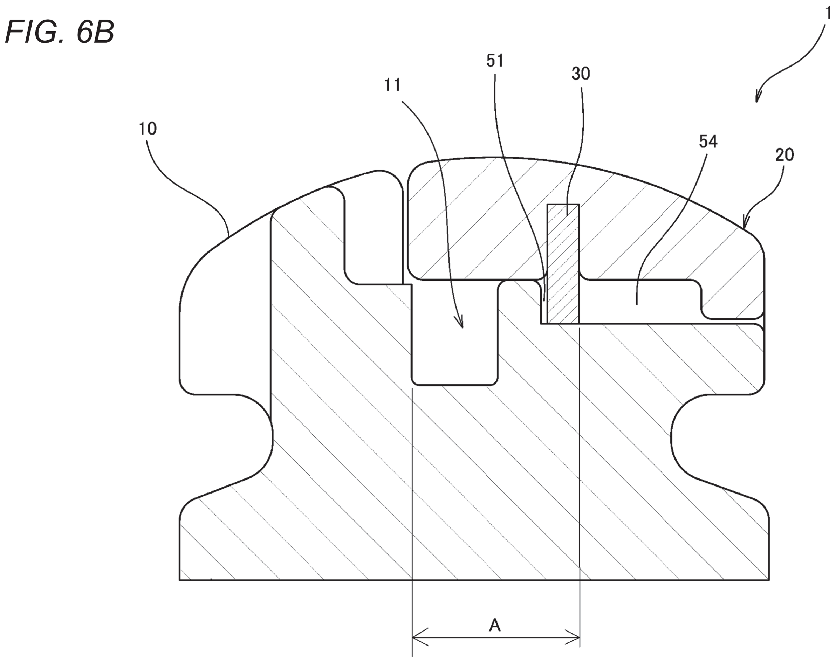

Next, an operation of changing the orthodontic bracket 1 from the open state to the closed state will be described with reference to FIGS. 6A, 6B, 7A, 7B, and 7C. FIG. 6A is a side sectional view of the orthodontic bracket 1 in the open state. FIG. 6B is a side cross-sectional view of the orthodontic bracket 1 in the closed state. FIGS. 6A and 6B are cross-sectional views taken along a line VI-VI in FIG. 3. Here, the operation will be described focusing on the clip 30, but the operator actually operates the shutter 20 to move the clip 30.

As shown in FIG. 6A, in the open state, the clip 30 is positioned at the open-position positioning portion 54. Conversely, in a state where the clip 30 is positioned at the open-position positioning portion 54, the slot 11 is not closed by the shutter 20 and is open. In this state, the clip 30 is not elastically deformed. When the clip 30 is moved forward from this state, the closed state shown in FIG. 6B can be achieved.

FIG. 7A is a diagram of the clip 30 positioned at the guide portion 53. As shown in FIG. 7A, when the clip 30 is moved forward from the open-position positioning portion 54, the pair of legs 32 are guided by the guide rail portion 41 at the guide portion 53. Since the width dimension of the guide groove 42 of the guide portion 53 decreases from the rear side to the front side, the legs 32 of the clip 30 are pushed by the side surfaces 42a (see FIG. 4) of the guide groove 42, and the clip 30 is elastically deformed.

FIG. 7B is a diagram of the clip 30 positioned at the passing portion 52. As shown in FIG. 7B, when the clip 30 is further moved forward from the guide portion 53, the clip 30 passes through the passing portion 52. The width dimension La of the guide rail portion 41 at the passing portion 52 gradually increases, and the width dimension La of the guide rail portion 41 at the rear end of the passing portion 52 is larger than the distance Lb between the pair of legs 32. Therefore, a large operating force is gradually required when passing through the passing portion 52.

FIG. 7C is a diagram of the clip 30 positioned at the closed-position positioning portion 51. As shown in FIG. 7C, when the clip 30 reaches the closed-position positioning portion 51 after passing through the passing portion 52, the orthodontic bracket 1 in the closed state shown in FIG. 6B can be obtained. In this state, since the clip 30 is elastically deformed to expand the pair of legs 32, the clip 30 exerts a force from the pair of legs 32 toward a center of the guide rail portion 41 in a width direction of the guide rail portion 41, that is, in a direction in which the pair of legs 32 pinches the guide rail portion 41. Therefore, unless an external force equal to or larger than a certain amount for moving the clip 30 in the rearward direction is applied, the clip 30 is maintained in the state of being positioned at the closed-position positioning portion 51, and the orthodontic bracket 1 remains in the closed state.

### (Operation from Closed State to Open State)

Next, an operation of changing from the closed state to the open state will be described. In the closed state, the clip 30 is positioned at the closed-position positioning portion 51. Conversely, in a state where the clip 30 is positioned at the closed-position positioning portion 51, the slot 11 is closed by the shutter 20. In this state, the clip 30 is elastically deformed as described above. When the clip 30 is moved toward the rear side from this state, the open state can be achieved.

The clip 30 is moved toward the rear side from the closed-position positioning portion 51 against a frictional force between the clip 30 and the guide rail portion 41 due to the elastic deformation of the clip 30. Thus, the pair of legs 32 pass through the guide rail portion 41 at the passing portion 52 and are guided by the guide portion 53. In this case, the width dimension La of the guide rail portion 41 gradually decreases, and thus, the operating force required to move the clip 30 gradually decreases.

When the clip 30 is further moved to the rear side, the clip 30 reaches the open-position positioning portion 54. In this state, the clip 30 abuts against the step surface 43 of the retaining portion 55 and cannot move further to the rear side.

### (Length in Front-rear Direction)

Next, it will be described that the orthodontic bracket 1 according to the present embodiment can be configured to have a shorter length in the front-rear direction than that of an orthodontic bracket 100 according to a reference example. FIG. 17A is a side cross-sectional view of the orthodontic bracket 100 according to the reference example in an open state. FIG. 17B is a side cross-sectional view of the orthodontic bracket 100 according to the reference example in a closed state.

In the orthodontic bracket 100 according to the reference example shown in FIG. 17B, an open-position positioning portion 154 is provided between a closed-position positioning portion 151 and a slot 111. In the orthodontic bracket 100 according to the reference example, in the closed state, a shutter 120 needs to cover the slot 111, and the closed-position positioning portion 151 needs to store a clip 130. That is, as shown in FIG. 17B, the length of the orthodontic bracket 100 in the front-rear direction is determined according to a distance A' from the closed-position positioning portion 151 to the slot 111.

As described above, in the orthodontic bracket 100 according to the reference example, the shutter 120 needs to extend from at least the closed-position positioning portion 151 to the slot 111. In the closed state, the clip 130 has to be positioned away from the slot 111 such that the open-position positioning portion 154 of the shutter 120 can be positioned between the clip 130 and the slot 111.

In this regard, in the orthodontic bracket 1 according to the present embodiment, as shown in FIGS. 6A and 6B, the closed-position positioning portion 51 is provided between the slot 11 and the open-position positioning portion 54. Therefore, a distance A between the closed-position positioning portion 51 and the slot 11 can be shortened, and a length of the shutter 20 in the front-rear direction is shortened. The open-position positioning portion 54 of the shutter 20 is not positioned between the clip 30 and the slot 11 in the closed state, and thus, the clip 30 and the closed-position positioning portion 51 can be disposed at positions close to the slot 11. Therefore, the length of the body 10 in the front-rear direction is also shortened.

In particular, in the orthodontic bracket 100 according to the reference example shown in FIGS. 17A and 17B, the clip 130 is disposed in a through hole 131 provided in a body 110. In this case, in order to avoid interference between the through hole 131 and a tie wing 132, a length of the body 110 in the front-rear direction tends to increase.

However, in the orthodontic bracket 1 according to the present embodiment, it is unnecessary to provide a through hole for disposing the clip 30 in the body 10, and thus, the length of the body 10 in the front-rear direction is less likely to be increased. For reference, when the orthodontic bracket 100 according to the reference example having a standard size is produced, the orthodontic bracket 1 according to the present embodiment can be made 0.4 mm shorter in the front-rear direction than that of the orthodontic bracket 100 according to the reference example, which is a 10% reduction in an overall length in the front-rear direction. A shape in the front of the slot 11 differs depending on a type, a size, and the like of the orthodontic bracket. Therefore, when compared only with the length in the rear of the slot 11 in the front-rear direction, in the shown example, the reduction of 0.4 mm in the length in the front-rear direction corresponds to the reduction of 25% in the length of the orthodontic bracket 100 of the reference example.

In a clinical orthodontic treatment, if the orthodontic bracket is large, when a patient wearing the orthodontic brackets bites, opposite teeth and the orthodontic bracket hits on each other, and the opposite teeth may be worn or the orthodontic bracket may be damaged. The patient may feel discomfort in the oral cavity due to the presence of the orthodontic bracket. Therefore, it is desired that a size of the orthodontic bracket 1 is as small as possible. Since the length in the front-rear direction of the orthodontic bracket 1 according to the present embodiment is short, it is possible to prevent the orthodontic bracket 1 from causing discomfort to the patient.

The positioning portion 40 of the orthodontic bracket 1 according to the present embodiment includes the passing portion 52 that causes the clip 30 to elastically deform when the clip 30 moves between the open-position positioning portion 54 and the closed-position positioning portion 51. In the closed state, the clip 30 is elastically deformed to apply a frictional force to the guide rail portion 41, thereby easily maintaining the closed state. When the open state is changed to the closed state, the clip 30 is elastically deformed, and an appropriate resistance can be applied to the operator, thereby informing the operator that the closed state is achieved. Conversely, when the closed state is changed to the open state, the resistance becomes weaker, thereby informing the operator that the closed state is released.

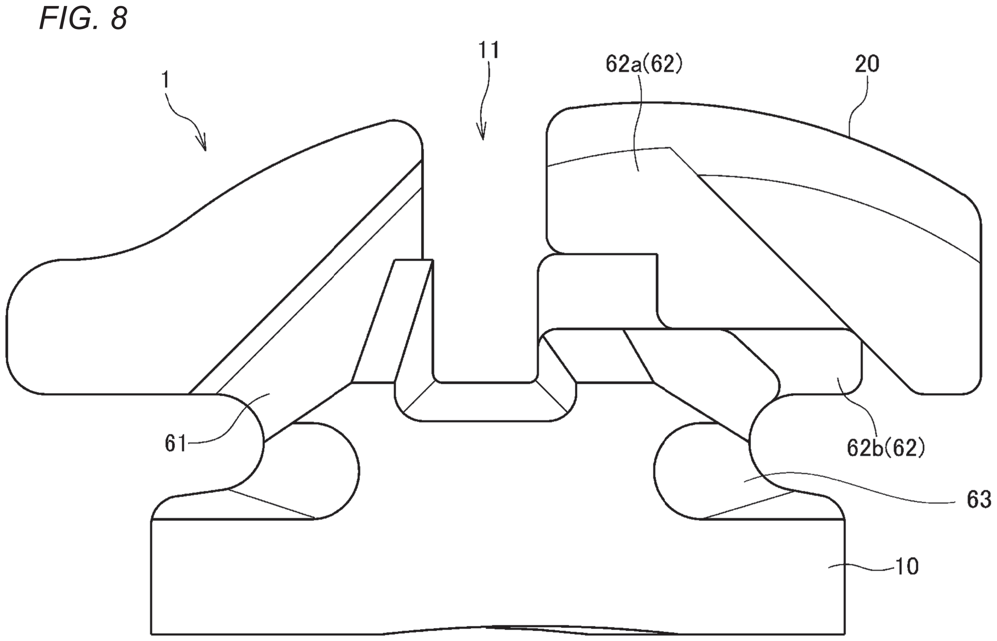

FIG. 8 is a side view of the orthodontic bracket 1 in the open state. As shown in FIG. 8, a ligature groove is provided on the side surface of the orthodontic bracket 1. A ligature wire can be hooked on the ligature groove, and a predetermined correction force can be applied to the orthodontic bracket 1 via the ligature wire.

A front ligature groove 61 extending obliquely upward and rearward and a rear ligature groove 62 provided behind the front ligature groove 61 and extending obliquely downward and rearward are provided on the side surfaces of the shown orthodontic bracket 1. A front portion 62a of the rear ligature groove 62 is provided at the shutter 20 and extends obliquely downward and rearward from the slot 11 toward a lower portion of a rear portion of the body 10. A rear portion 62b of the rear ligature groove 62 is provided at the body 10 and extends obliquely downward and rearward to be continuous from the front portion 62a. The rear ligature groove 62 is provided to extend from the shutter 20 to the body 10. A lateral ligature groove 63 extending in the left-right direction is also provided in the rear portion of the body 10 of the orthodontic bracket 1.

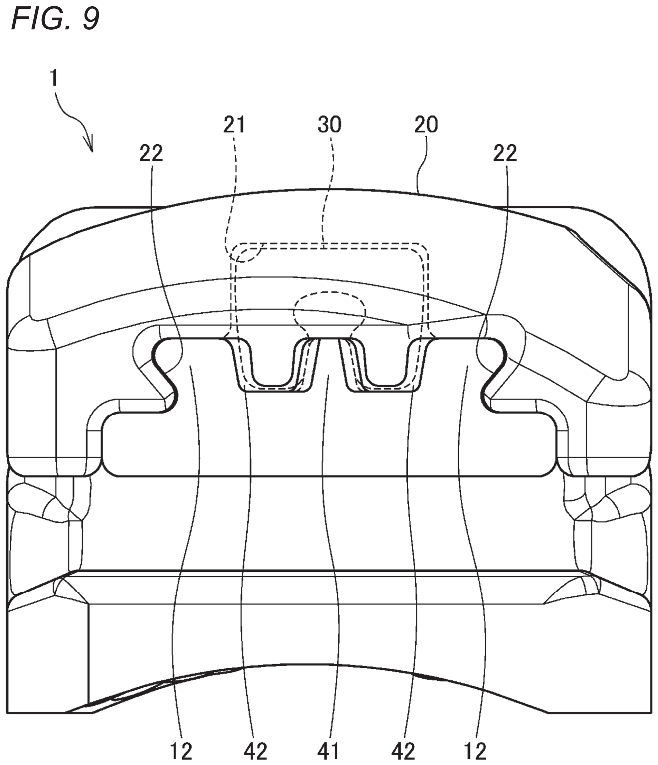

FIG. 9 is a diagram of the orthodontic bracket 1 as viewed from the rear side. As shown in FIG. 9, a pair of retaining guide portions 12 projecting upward are provided on the upper surface of the body 10 outside the pair of guide grooves 42 in the left-right direction. As shown in FIG. 1, the retaining guide portions 12 extend in the front-rear direction. An upper end of the retaining guide portion 12 provided on the left side of the guide rail portion 41 protrudes to the left side, and an upper end of the retaining guide portion 12 provided on the right side of the guide rail portion 41 protrudes to the right side.

A pair of retaining grooves 22 (dovetail grooves) having a shape corresponding to the retaining guide portions 12 are provided on the lower surface of the shutter 20. The retaining grooves 22 also extend in the front-rear direction. The retaining groove 22 provided on the left side of the clip 30 has a cross-sectional shape recessed to the left side, and the retaining groove 22 provided on the right side of the clip 30 has a cross-sectional shape recessed to the right side.

That is, the left retaining guide portion 12 and the left retaining groove 22 abut each other at an abutment surface that slopes to the right side from the upper side to the lower side, and the right retaining guide portion 12 and the right retaining groove 22 abut each other at an abutment surface that slopes to the left from above and below. In this way, the shutter 20 is provided with the retaining groove 22 extending in the front-rear direction, and the upper surface of the body 10 is provided with the retaining guide portion 12 that fits into the retaining groove 22 of the shutter 20. The retaining guide portion 12 restricts the shutter 20 from coming off upward, while allowing the shutter 20 to move in the front-rear direction.

Therefore, even if a force that causes the shutter 20 to come off upward relative to the body 10 is applied by an archwire or the like, the pair of abutment surfaces prevents the shutter 20 from coming off upward from the body 10. The retaining guide portion 12 and the retaining groove 22 have cross-sectional shapes corresponding to each other, and extend in the front-rear direction, and thus, a function of guiding the movement of the shutter 20 in the front-rear direction is exerted.

As shown in FIG. 4, the positioning portion 40 has an inclined surface that applies a force to the clip 30 to push the clip 30 upward. Specifically, the guide rail portion 41 has a convex shape that is narrowed upward. Therefore, in a state where the pair of legs 32 of the clip 30 straddle the guide rail portion 41, the left and right side surfaces 41a of the guide rail portion 41 apply a force to push the clip 30 upward.

As described with reference to FIG. 9, the upper surface of the body 10 is provided with the retaining guide portion 12 that fits into the retaining groove 22 of the shutter 20. Accordingly, the shutter 20 is prevented from coming off the body 10.

Therefore, when the clip 30 is located in the closed-position positioning portion 51 as shown in FIG. 7C, a force acts on the clip 30 and the shutter 20 to push the clip 30 and the shutter 20 upward, and the body 10 uses the retaining guide portion 12 to prevent the shutter 20 from moving upward. Accordingly, rattling of the shutter 20 in the closed state is prevented.

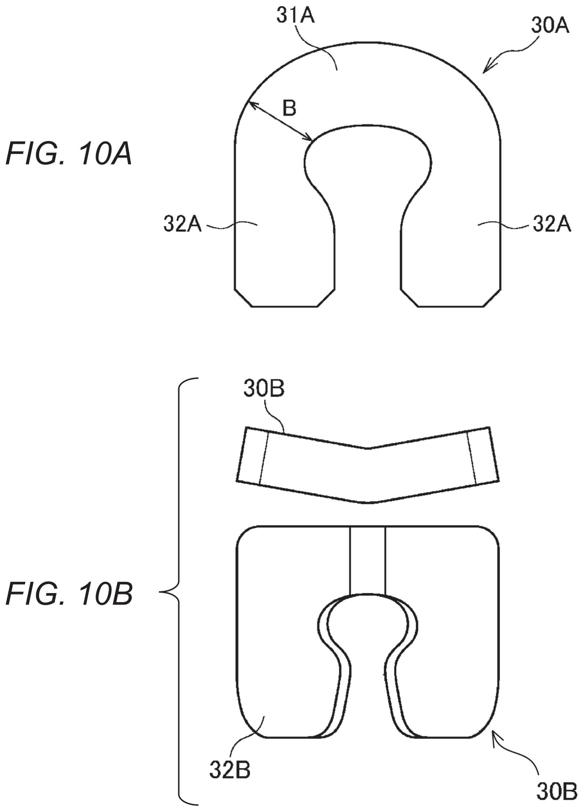

The clip 30 and the positioning portion 40 are not limited to the shapes shown in FIG. 1. An orthodontic bracket according to a modification will be described with reference to FIGS. 10A to 16B. FIG. 10A is a front view of a clip 30A of an orthodontic bracket according to a first modification. As shown in FIG. 10A, it is preferable that a width dimension B of a connection portion of the clip 30A from a leg 32A to a coupling portion 31A is substantially constant. Stress concentration is less likely to occur when the clip 30A is elastically deformed.

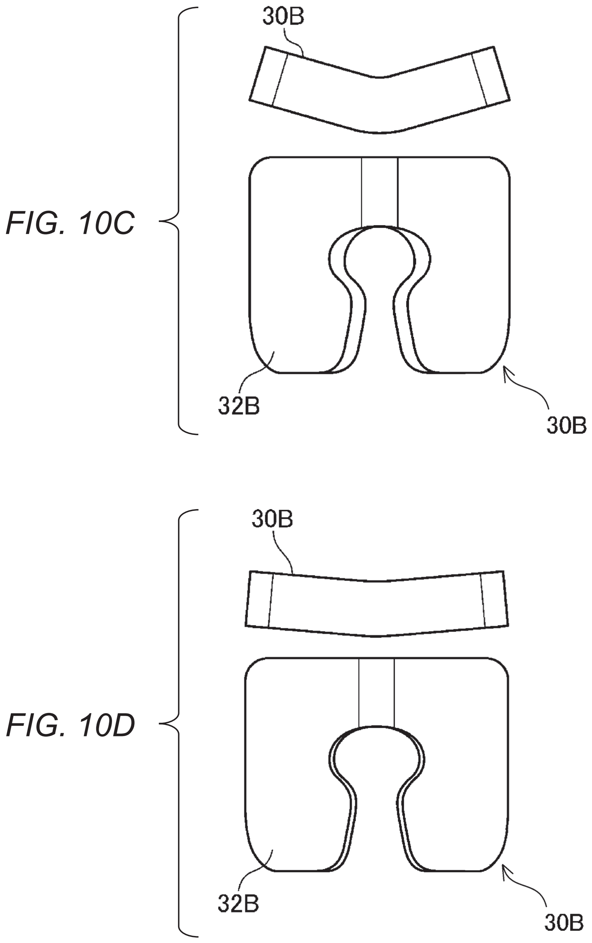

FIGS. 10B to 10D show a clip 30B of an orthodontic bracket according to a second modification. Upper parts of FIGS. 10B to 10D are top views of the clip 30B, and lower parts of FIG. 10B to FIG. 10D are front views of the clip 30B. FIG. 10B shows the clip 30B in a state where the clip 30B is not elastically deformed. The clip 30B of the present modification has a shape bent at a center portion when viewed from above. FIG. 10C shows the clip 30B in a further bent state, and FIG. 10D shows the clip 30B in a state where the clip 30B is bent in a direction opposite to an original bending direction. When the clip 30B is bent strongly, a distance between a pair of legs 32B becomes narrower, and when the clip 30B is bent in the opposite direction, the distance between the pair of legs 32B becomes longer.

FIGS. 10B to 10D show the clip 30B bent at the center portion, but the present disclosure is not limited thereto. The clip 30B may have a gently curved shape without a clear fold when viewed from above.

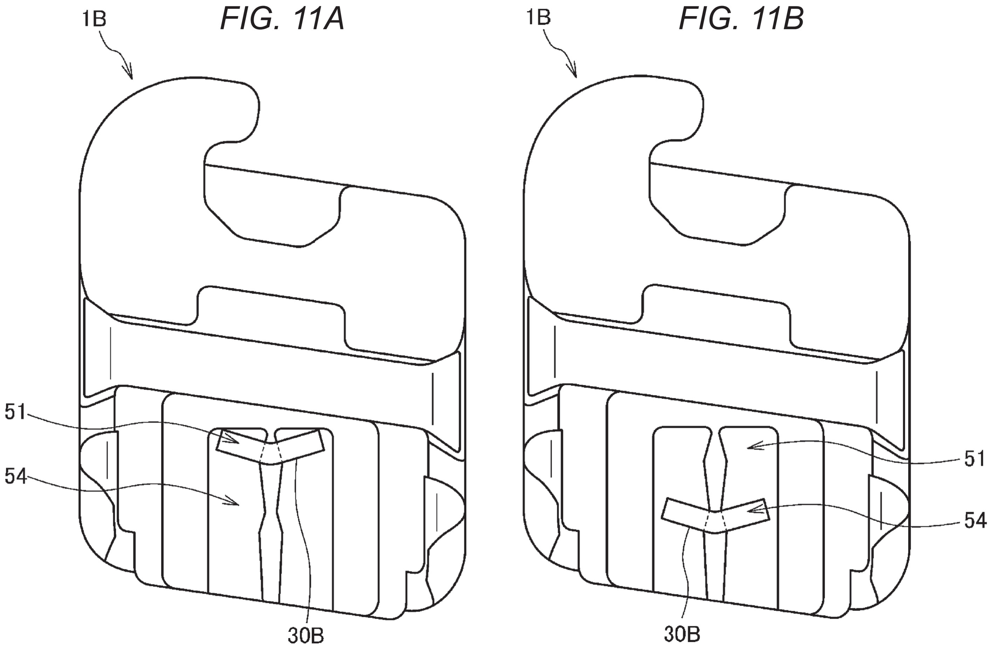

FIG. 11A is a top view of an orthodontic bracket 1B according to a third modification in a closed state, to which the clip 30B shown in FIGS. 10B to 10D is applied. FIG. 11B is a top view of the orthodontic bracket 1B according to the third modification in an open state. In FIGS. 11A to 16B, the shutter 20 is omitted for illustration.

As shown in FIGS. 11A and 11B, in the orthodontic bracket 1B of the third modification, the clip 30B is elastically deformed in a top view when changing the open state to the closed state. In a top view, the clip 30B is bent such that the center portion is located behind left and right ends. When the open state is changed to the closed state, the left and right ends of the clip 30B are relatively displaced to a rear side compared to the center portion, and the bent clip 30B is elastically deformed to be pushed and expanded, and thus, a distance between the pair of legs 32B becomes wider. Therefore, an operation force when the operation is performed to change the open state to the closed state is reduced. Further, when the closed state is changed to the open state, the clip 30B is elastically deformed such that the distance between the pair of legs 32B becomes narrower, and thus, the closed state is easily maintained.

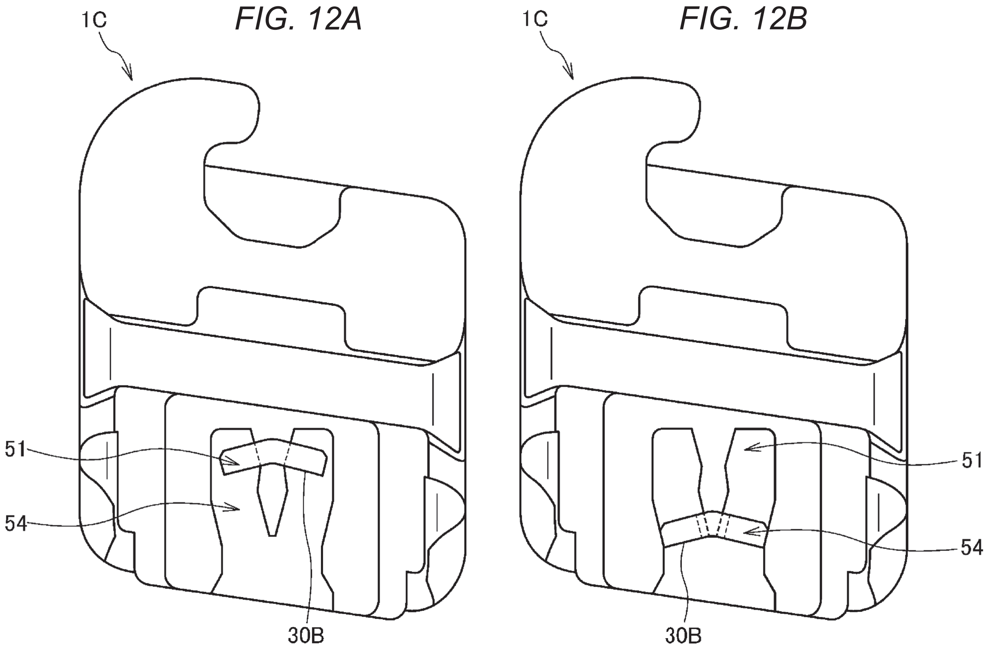

FIG. 12A is a top view of an orthodontic bracket 1C according to a fourth modification in a closed state, to which the clip 30B shown in FIGS. 10B to 10D is applied. FIG. 12B is a top view of the orthodontic bracket 1C according to the fourth modification in an open state. As shown in FIG. 12A and FIG. 12B, in the orthodontic bracket 1C of the fourth modification, the clip 30B is disposed in a direction opposite to the orthodontic bracket 1B of the third modification. Therefore, when the open state is changed to the closed state, the distance between the pair of legs 32B becomes narrower, and thus, a large operation force is required. However, when the closed state is changed to the open state, the distance between the pair of legs 32B becomes wider, and thus, it is easy to change to the open state.

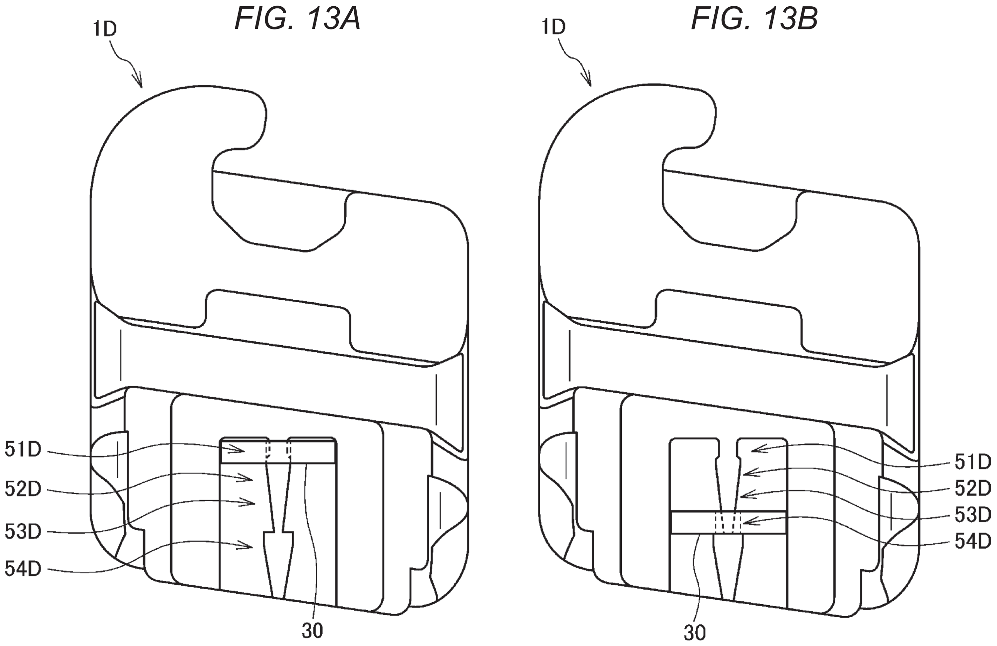

FIG. 13A is a top view of an orthodontic bracket 1D according to a fifth modification in a closed state, to which the clip 30 shown in FIG. 1 is applied. FIG. 13B is a top view of the orthodontic bracket 1D according to the fifth modification in an open state. As shown in FIG. 13A and FIG. 13B, a width dimension La of a guide rail portion 41 at a closed-position positioning portion 51D may be smaller than a width dimension La of a guide rail portion 41 at a passing portion 52D. A guide rail portion 41 at a guide portion 53D may not have a constant width dimension La, but may have a shape in which the width dimension La gradually increases from the rear side to the front side to be continuous with the passing portion 52D.

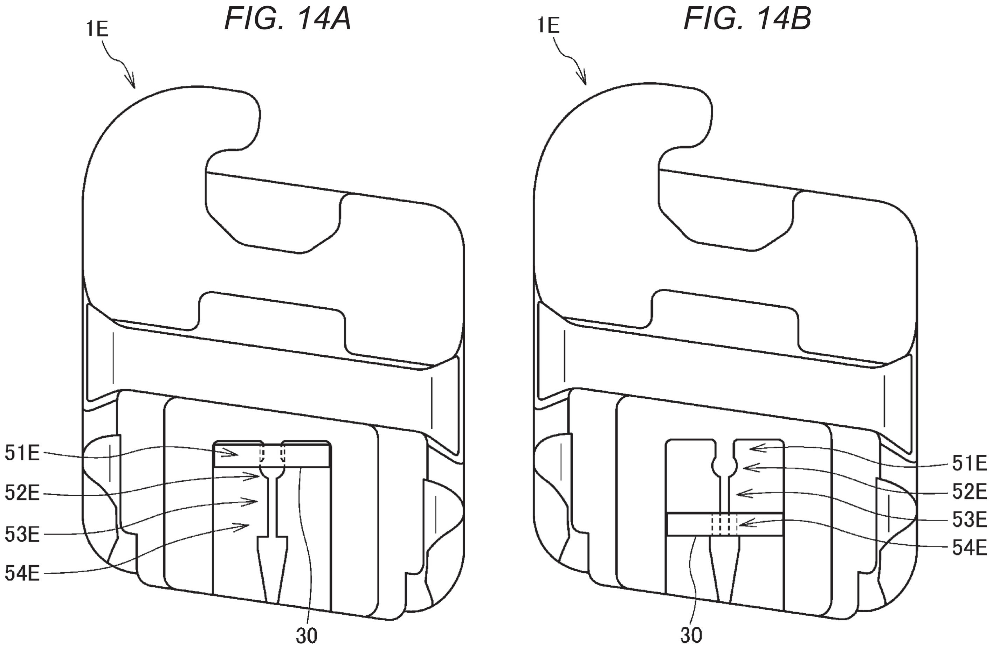

FIG. 14A is a top view of an orthodontic bracket 1E according to a sixth modification in a closed state, to which the clip 30 shown in FIG. 1 is applied. FIG. 14B is a top view of the orthodontic bracket 1E according to the sixth modification in an open state. As shown in FIGS. 14A and 14B, the guide rail portion 41 may be a part of a cylinder at a passing portion 52E.

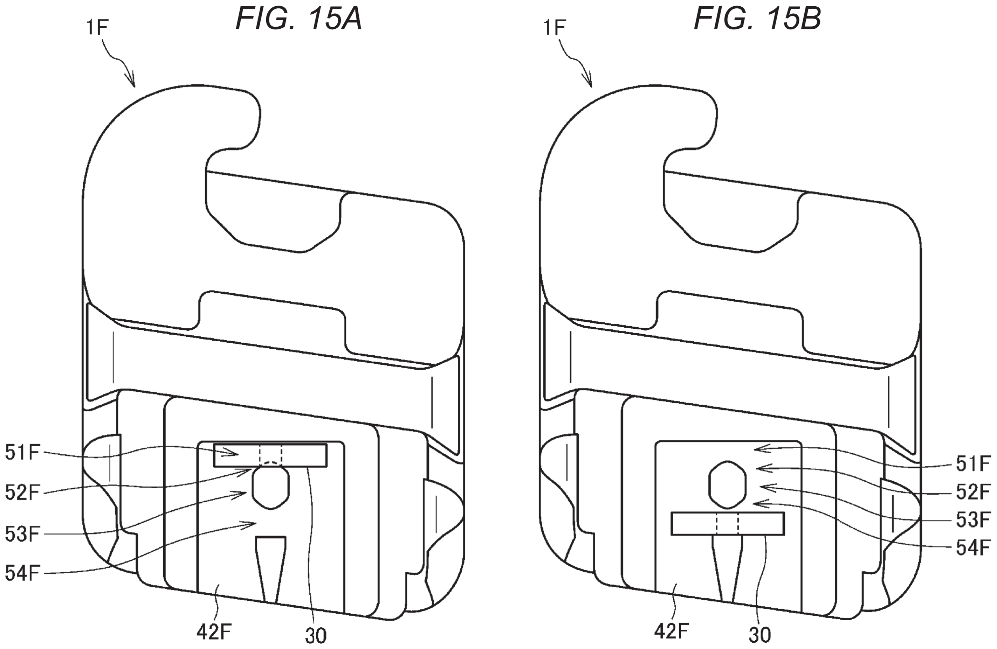

FIG. 15A is a top view of an orthodontic bracket 1F according to a seventh modification in a closed state, to which the clip 30 shown in FIG. 1 is applied. FIG. 15B is a top view of the orthodontic bracket 1F according to the seventh modification in an open state. As shown in FIGS. 15A and 15B, a guide portion 53F and a closed-position positioning portion 51F may not be constituted by the guide rail portion 41 and the guide groove 42, but only by the guide groove 42F.

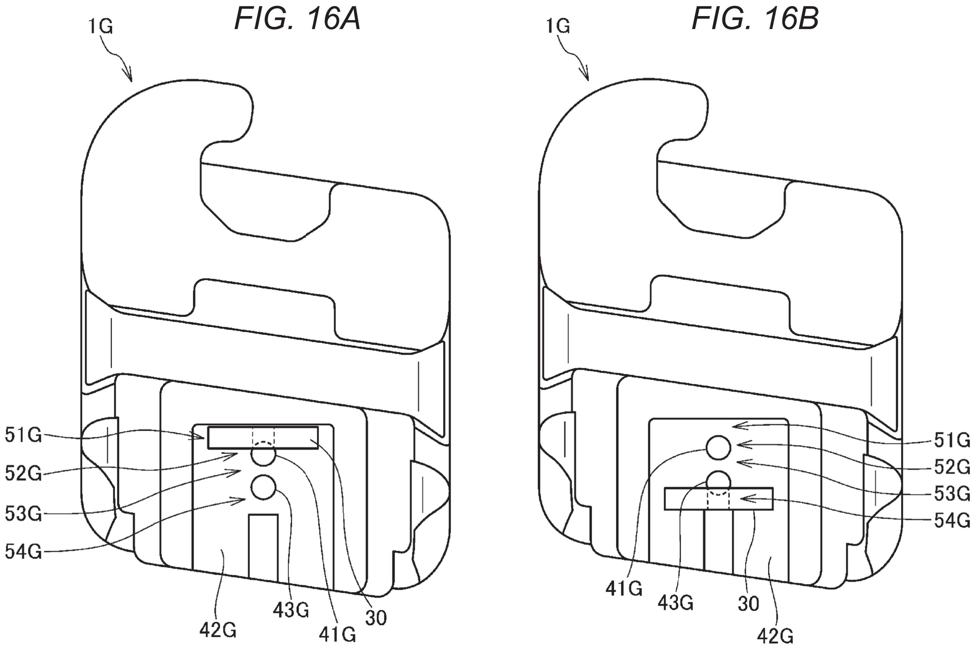

FIG. 16A is a top view of an orthodontic bracket 1G according to an eighth modification in a closed state, to which the clip 30 shown in FIG. 1 is applied. FIG. 16B is a top view of the orthodontic bracket 1G according to the eighth modification in an open state. As shown in FIGS. 16A and 16B, a closed-position positioning portion 51G and an open-position positioning portion 54G may be constituted by only a guide groove 42G, a first cylindrical portion 41G and the guide groove 42G as the guide rail portion 41 may constitute a passing portion 52G, and a second cylindrical portion 43G as the guide portion 53 may constitute a boundary between the guide portion 53G and the open-position positioning portion 54G.

Although the embodiment of the present disclosure has been described above, but it is needless to say that the technical scope of the present disclosure should not be interpreted as being limited by the description of the present embodiment. The present embodiment is merely an example, and it is understood by those skilled in the art that various modifications of the embodiment are possible within the scope of the invention described in the claims. The technical scope of the present disclosure should be determined based on the scope of the invention described in the claims and an equivalent scope thereof.

## Claims

1. An orthodontic bracket comprising:
a body comprising a lower surface and an upper surface, the lower surface being configured to be directly or indirectly attached to a tooth, the upper surface having a slot configured to store an archwire;
a shutter configured to move on the upper surface of the body in an opening and closing direction intersecting with the slot such that the shutter is allowed to be selectively placed in a closed state to close the slot and in an open state to open the slot; and
a clip configured to be attached to a lower surface of the shutter and configured to elastically deform,
wherein the body comprises a positioning portion configured to allow the clip to be selectively positioned at a closed position where the shutter becomes in the closed state and at an open position where the shutter becomes in the open state, and
wherein the positioning portion of the body comprises:
an open-position positioning portion configured to store the clip in the open position;
a closed-position positioning portion located between the open-position positioning portion and the slot in the opening and closing direction and configured to store the clip in the closed position; and
a passing portion provided between the open-position positioning portion and the closed-position positioning portion in the opening and closing direction and configured to cause the clip to elastically deform when the clip moves between the open-position positioning portion and the closed-position positioning portion.

2. The orthodontic bracket according to claim 1,
wherein the body further comprises a retaining guide portion extending along the opening and closing direction, the retaining guide portion being configured to restrict the shutter from coming off upward while allowing the shutter to move in the opening and closing direction.

3. The orthodontic bracket according to claim 1,
wherein at least a part of the clip is located closer to a slot side than a tie wing or a ligature groove when viewed from an extension direction of the slot.

4. The orthodontic bracket according to claim 1,
wherein the positioning portion has an inclined surface configured to apply a force to the clip to push the clip upward.

5. The orthodontic bracket according to claim 1,
wherein the clip is an elastic member extending in an up-down direction and in a direction intersecting with the opening and closing direction, and
wherein the clip comprises:
a first leg and a second leg, the first leg and the second leg facing each other in the direction intersecting with the opening and closing direction; and
a coupling portion coupling an upper end of the first leg and an upper end of the second leg.

6. The orthodontic bracket according to claim 5,
wherein the first leg comprises a first side surface, and the second leg comprises a second side surface facing the first surface,
wherein each of the first side surface and the second side surface is inclined such that a separation distance between the first leg and the second leg decreases upward.

7. The orthodontic bracket according to claim 5,
wherein a width dimension of the coupling portion of the clip is constant.

8. The orthodontic bracket according to claim 5,
wherein the clip has a shape curved at a center portion when viewed from above.

9. The orthodontic bracket according to claim 1,
wherein the shutter has a retaining groove extending in the opening and closing direction, and
wherein the upper surface of the body comprises a retaining guide portion configured to fit into the retaining groove of the shutter.

10. The orthodontic bracket according to claim 1,
wherein the positioning portion further comprises a retaining portion on an open side in the opening and closing direction further than the open-position positioning portion, the retaining portion being configured to prevent the clip from coming off from the open-position positioning portion to the open side.

11. The orthodontic bracket according to claim 10,
wherein the positioning portion further includes an insertion facilitating portion on the open side in the opening and closing direction further than the retaining portion, the insertion facilitating portion being configured to allow the clip to move to pass the retaining portion and reach the open-position positioning portion.

12. The orthodontic bracket according to claim 1,
wherein the positioning portion further comprises a guide rail portion extending in the opening and closing direction, and
wherein a width dimension of the guide rail portion at the open-position positioning portion is smaller than a width dimension of the guide rail portion at the closed-position positioning portion.

13. The orthodontic bracket according to claim 12,
wherein a width dimension of the guide rail portion at the passing portion gradually increases toward a closing side of the opening and closing direction.
